# EUROPEAN PATENT SPECIFICATION

(11) **EP 4 486 550 B1**
(45) Date of publication and mention of the grant of the patent: **24.12.2025**
(21) Application number: 23709360.4
(22) Date of filing: 01.03.2023
(51) Int. Cl.: B25J 15/00, B25J 15/08, B25J 15/04

(54) **FINGER SUB-ASSEMBLY FOR A ROBOTIC MANIPULATOR**
FINGERBAUGRUPPE FÜR EINEN ROBOTERMANIPULATOR
SOUS-ENSEMBLE DOIGT POUR MANIPULATEUR ROBOTIQUE

(30) Priority: 03.03.2022 GB 202202957
(43) Date of publication of application: 08.01.2025
(73) Proprietor: Ocado Innovation Limited, Hatfield, Hertfordshire AL10 9UL (GB)
(72) Inventor: THOMAS, Paris, Hatfield Hertfordshire AL10 9UL (GB); JUPP, Lily, Hatfield Hertfordshire AL10 9UL (GB)
(74) Representative: Ocado Group IP Department
(86) International application number: PCT/EP2023/055236
(87) International publication number: WO 2023/166092

(56) References cited:
- WO-A1-2020/215153
- CN-A- 108 890 633
- CN-U- 210 256 194

## Description

The present disclosure relates to a finger sub-assembly for a gripper assembly, of the type used with a robotic manipulator. Aspects of the invention relate to the finger sub-assembly, the gripper assembly and the robotic manipulator.

### BACKGROUND

Robotic manipulators often include grippers having opposed finger sub-assemblies for gripping an article during its manipulation. In most instances, the finger sub-assemblies comprise one or more high-friction pads for contacting the article. The high-friction pads are typically secured to a base unit, or the equivalent, by an adhesive. This can cause issues as the adhesive may degrade over time, leading to the detachment of the high-friction pad, and can be particularly problematic if the finger sub-assemblies are required to pick grocery items as this would require a food-safe adhesive that satisfies strict regulatory requirements. CN 108 890 633 A and CN 210 256 194 U both describe the preamble of appended claim 1. It is against this background that the invention was devised.

### SUMMARY

In a first aspect, there is provided a finger sub-assembly according to appended claim 1. Conventional finger sub-assemblies include a high-friction pad secured to its base unit, or the equivalent, by an adhesive. This can cause issues as the adhesive may degrade over time, leading to the detachment of the high-friction pad, and can be particularly problematic if the gripper assembly is required to pick grocery items as it would require a food-safe adhesive that must satisfy strict regulatory requirements. The use of an adhesive also makes replacing the high-friction pad more difficult. Instead of chemical bond provided by an adhesive, therefore, the finger sub-assembly according to the first aspect is configured such that the high-friction pad is received within a recessed area for contacting an article during its manipulation, wherein a cutout defining the recessed area and the high-friction pad are configured to form an interference fit.

Optionally, the high-friction pad is oversized with respect to the cutout in a lateral direction.

Optionally, the high-friction pad is oversized with respect to the cutout in a longitudinal direction.

Optionally, the widths of the cut-out and the high-friction pad are tapered in a direction towards the tip of the base unit.

Optionally, the high-friction pad comprises a rigid plate overmolded by a high-friction material and wherein the base unit further comprises longitudinal undercuts into which parts of the rigid plate are received when the high-friction pad is received in the cutout.

Optionally, the end of the cutout at the tip of the base unit comprises a lateral undercut into which part of the rigid plate is received when the high-friction pad is received in the cutout.

Optionally, the thickness of the high-friction pad is tapered such that the high-friction material and part of the rigid plate are received in the lateral undercut when the high-friction pad is received in the cutout.

Optionally, the rigid plate is perforated.

Optionally, the cutout comprises an open end through which the high-friction pad is received.

Optionally, the base unit is configured such that the open end of the cutout is at least partially closed by the mount when the finger sub-assembly is connected thereto.

Optionally, the tip of the base unit is shaped to protect the end of the high-friction pad from impacts during use.

Optionally, the base unit comprises a bore through which a bolt configured to fasten the finger sub-assembly to the mount can be accessed.

Optionally, the finger sub-assembly further comprising a frame unit, wherein the frame and base units are configured to be fastened together to clamp the high-friction pad in position.

In a second aspect, there is provided a gripper assembly comprising a finger sub-assembly according to the first aspect.

In a third aspect, there is provided a robotic manipulator comprising a gripper assembly according to the second aspect.

### BRIEF DESCRIPTION OF THE DRAWINGS

These and other aspects of the invention will now be described, by way of example only, with reference to the accompanying drawings, in which:
Figure 1 is a schematic depiction of a picking system for use with the invention;
Figure 2 is a side view of a gripper assembly for use with the system of Figure 1;
Figure 3 is an isometric view of a finger sub-assembly as shown in Figure 2;
Figure 4a is an isometric view of a base unit of the finger sub-assembly of Figure 3;
Figure 4b is a plan view of the base unit of Figure 4a;
Figure 5a is a plan view of a high-friction pad of the finger sub-assembly of Figure 3;
Figure 5b is a side view of the high-friction pad of Figure 5a;
Figure 6 is a lateral cross-sectional view of the finger sub-assembly of Figure 3; and,
Finger 7 is a longitudinal cross-sectional view of the finger sub-assembly of Figure 3.

In the drawings, like features are denoted by like reference signs where appropriate.

### DETAILED DESCRIPTION

In the following description, some specific details are included to provide a thorough understanding of the disclosed examples. One skilled in the relevant art, however, will recognise that other examples may be practised without one or more of these specific details, or with other components, materials, etc., and structural changes may be made without departing from the scope of the invention as defined in the appended claims. Moreover, references in the following description to any terms having an implied orientation are not intended to be limiting and refer only to the orientation of the features as shown in the accompanying drawings. In some instances, well-known features or systems, such as processors, sensors, storage devices, network interfaces, fasteners, electrical connectors, and the like, are not shown or described in detail to avoid unnecessarily obscuring descriptions of the disclosed embodiments.

Unless the context requires otherwise, throughout the specification and the appended claims, the word "comprise" and variations thereof, such as, "comprises" and "comprising" are to be construed in an open, inclusive sense that is as "including, but not limited to."

Reference throughout this specification to "one", "an", or "another" applied to "embodiment", "example", means that a particular referent feature, structure, or characteristic described in connection with the embodiment, example, or implementation is included in at least one embodiment, example, or implementation. Thus, the appearances of the phrase "in one embodiment" or the like in various places throughout this specification are not necessarily all referring to the same embodiment. Furthermore, the particular features, structures, or characteristics may be combined in any suitable manner in one or more embodiments, examples, or implementations.

It should be noted that, as used in this specification and the appended claims, the users forms "a", "an", and "the" include plural referents unless the content clearly dictates otherwise. It should also be noted that the term "or" is generally employed in its sense including "and/or" unless the content clearly dictates otherwise.

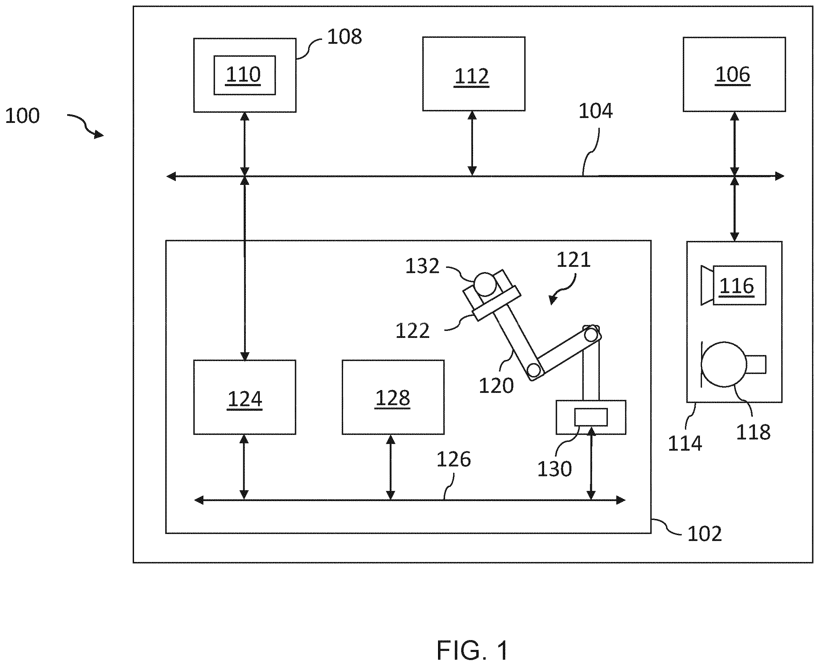

With reference to Figure 1, there is illustrated an example of a picking system 100 of the sort that is appropriate for use with the present invention. The picking system 100 may form part of an online retail operation, such as an online grocery retail operation, but may also be applied to any other operations requiring the picking and/or sorting of items or articles. In this example, the system 100 includes a manipulator apparatus 102 comprising a robotic manipulator 121 configured to pick an article 132 from a first location and place the article 132 in a second location. The manipulator apparatus 102 is communicably coupled via a communication interface 104 to other components of the system 100, such as to one or more optional operator interfaces 106, from which an observer may observe or monitor the operation of the system 100 and the manipulator apparatus 102. The operator interfaces 106 may include a WIMP interface and an output display of explanatory text or a dynamic representation of the manipulator apparatus 102 in a context or scenario. For example, the dynamic representation of the manipulator apparatus 102 may include video and audio feed, for instance a computer-generated animation. Examples of suitable communication interface 104 include a wire based network or communication interface, optical based network or communication interface, wireless network or communication interface, or a combination of wired, optical, and/or wireless networks or communication interfaces.

The system 100 further comprises a control system 108 including at least one controller 110 communicably coupled to the manipulator apparatus 102 and the other components of the system 100 via the communication interface 104. The controller 110 comprises a control unit or computational device having one or more electronic processors, within which is embedded a set of control instructions provided as processor-executable data that, when executed, cause the controller 110 to issue actuation commands or control signals to the manipulator system 102, causing the robotic manipulator 121 to carry out various actions, e.g., identify and manipulate articles 132. The one or more electronic processors may include at least one logic processing unit, such as one or more microprocessors, central processing units (CPUs), digital signal processors (DSPs), graphics processing units (GPUs), application-specific integrated circuits (ASICs), programmable gate arrays (PGAs), programmed logic units (PLUs), or the like. In some implementations, the controller 110 is a smaller processor-based device like a mobile phone, single board computer, embedded computer, or the like, which may be termed or referred to interchangeably as a computer, server, or an analyser. The set of control instructions may also be provided as processor-executable data associated with the operation of the system 100 and manipulator apparatus 102 included in a non-transitory processor-readable storage device 112, which forms part of the system 100 and is accessible to the controller 110 via the communication interface 104. In some implementations, storage device 112 includes two or more distinct devices. The storage device 112 can, for example, include one or more volatile storage devices, for instance random access memory (RAM), and one or more non-volatile storage devices, for instance read only memory (ROM), flash memory, magnetic hard disk (HDD), optical disk, solid state disk (SSD), or the like. A person of skill in the art will appreciate storage may be implemented in a variety of ways such as a read only memory (ROM), random access memory (RAM), hard disk drive (HDD), network drive, flash memory, digital versatile disk (DVD), any other forms of computer- and processor-readable memory or storage medium, and/or a combination thereof. Storage can be read only or read-write as needed.

The system 100 includes a sensor subsystem 114 comprising one or more sensors that detect, sense, or measure conditions or states of manipulator apparatus 102 and/or conditions in the environment or workspace in which the manipulator 121 operates, and produce or provide corresponding sensor data or information. Sensor information includes environmental sensor information, representative of environmental conditions within the workspace of the manipulator 121, as well as information representative of condition or state of the manipulator apparatus 102, including the various subsystems and components thereof, and characteristics of the articles 132 to be manipulated. The acquired data may be transmitted via the communication interface 104 to the controller 110 for directing the manipulator 121 accordingly. Such information can, for example, include diagnostic sensor information that is useful in diagnosing a condition or state of the manipulator apparatus 102 or the environment in which manipulator 121 operates. For example, such sensors may include contact sensors, force sensors, strain gages, vibration sensors, position sensors, attitude sensors, accelerometers, and the like. Such sensors may include one or more of cameras or imagers 116 (e.g., responsive in visible and/or nonvisible ranges of the electromagnetic spectrum including for instance infrared and ultraviolet), radars, sonars, touch sensors, pressure sensors, load cells, microphones 118, meteorological sensors, chemical sensors, or the like. In some implementations, the diagnostic sensors include sensors to monitor a condition and/or health of an on-board power source within the manipulator apparatus 102 (e.g., battery array, ultra-capacitor array, fuel cell array). In some implementations, the one or more sensors comprise receivers to receive position and/or orientation information concerning the manipulator 121. For example, a global position system (GPS) receiver to receive GPS data, two more time signals for the controller 110 to create a position measurement based on data in the signals, such as, time of flight, signal strength, or other data to effect a position measurement. Also, for example, one or more accelerometers, which also form part of the manipulator apparatus 102, could be provided on the manipulator 121 to acquire inertial or directional data, in one, two, or three axes, regarding the movement thereof.

The manipulator 121 may be piloted by a human operator at the operator interface 106. In human operator controlled or piloted mode, the human operator observes representations of sensor data, for example, video, audio, or haptic data received from one or more sensors of the sensor subsystem 114. The human operator then acts, conditioned by a perception of the representation of the data, and creates information or executable control instructions to direct the manipulator 121 accordingly. In piloted mode, the manipulator apparatus 102 may execute control instructions in real-time (e.g., without added delay) as received from the operator interface 106 without taking into account other control instructions based on sensed information.

In some implementations, the manipulator apparatus 102 operates autonomously. That is, without a human operator creating control instructions at the operator interface 106 for directing the manipulator 121. The manipulator apparatus 102 may operate in an autonomous control mode by executing autonomous control instructions. For example, the controller 110 can use sensor data from one or more sensors of the sensor subsystem 114, the sensor data being associated with operator generated control instructions from one or more times the manipulator apparatus 102 was in piloted mode to generate autonomous control instructions for subsequent use. For example, by using deep learning techniques to extract features from the sensor data such that in autonomous mode the manipulator apparatus 102 autonomously recognize features or conditions in its environment and the article 132 to be manipulated, and in response perform a defined act, set of acts, a task, or a pipeline or sequence of tasks. In some implementations, the controller 110 autonomously recognises features and/or conditions in the environment surrounding the manipulator 121, as represented by a sensor data from the sensor subsystem 114 and one or more virtual articles composited into the environment, and in response to being presented with the representation, issue control signals to the manipulator apparatus 102 to perform one or more actions or tasks.

In some instances, the manipulator apparatus 102 may be controlled autonomously at one time, while being piloted, operated, or controlled by a human operator at another time. That is, operate under an autonomous control mode and change to operate under a piloted mode (i.e., non-autonomous). In another mode of operation, the manipulator apparatus 102 can replay or execute control instructions previously carried out in a human operator controlled (or piloted) mode. That is, the manipulator apparatus 102 can operate without sensor data based on replayed pilot data.

The manipulator apparatus 102 further includes a communication interface subsystem 124, e.g., a network interface device, that is communicably coupled to a bus 126 and provides bidirectional communication with other components of the system 100 (e.g., the controller 110) via the communication interface 104. The communication interface subsystem 124 may be any circuitry affecting bidirectional communication of processor-readable data, and processor-executable instructions, for instance radios (e.g., radio or microwave frequency transmitters, receivers, transceivers), communications ports and/or associated controllers. Suitable communication protocols include FTP, HTTP, Web Services, SOAP with XML, WI-FI^{™} compliant, BLUETOOTH^{™} compliant, cellular (e.g., GSM, CDMA), and the like.

The manipulator 121 is an electro-mechanical machine comprising one or more appendages, such as a robotic arm 120, and a gripper assembly or end-effector 122 mounted on an end of the robotic arm 120. The gripper assembly 122 is a device of complex design configured to interact with the environment in order to perform a number of tasks, including, for example, gripping, grasping, releasably engaging or otherwise interacting with the article 132. The manipulator apparatus 102 further includes a motion subsystem 130, communicatively coupled to the robotic arm 120 and gripper assembly 122, comprising one or more motors, solenoids, other actuators, linkages, drive-belts, and the like operable to cause the robotic arm 120 and/or gripper assembly 122 to move within a range of motions in accordance with the actuation commands or control signals issued by the controller 110. The motion subsystem 130 is communicatively coupled to the controller 110 via the bus 126.

The manipulator apparatus 102 also includes an output subsystem 128 comprising one or more output devices, such as speakers, lights, and displays that enable the manipulator apparatus 102 to send signals into the workspace in order to communicate with, for example, an operator and/or another manipulator apparatus 102.

A person of ordinary skill in the art will appreciate the components in manipulator apparatus 102 may be varied, combined, split, omitted, or the like. In some examples one or more of the communication interface subsystem 124, the output subsystem 128, and/or the motion subsystem 130 may be combined. In other examples, one or more of the subsystems (e.g., the motion subsystem 130) are split into further subsystems.

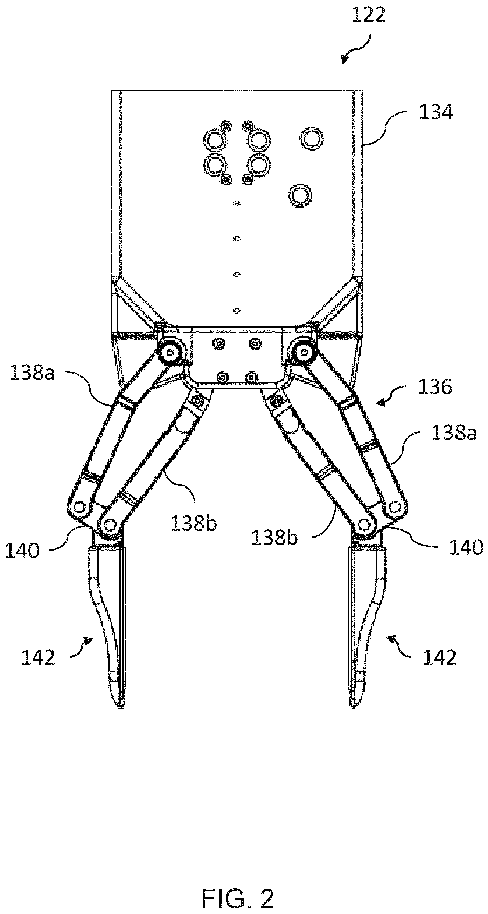

Figure 2 shows an example of a gripper assembly 122 suitable for use with the manipulator 121 of Figure 1. In this example, the gripper assembly 122 comprises a wrist component 134 that is used to connect the assembly 122 to the manipulator 121. The wrist component 134 moveably supports a linkage assembly, generally designated by 136. The linkage assembly 136 comprises two pairs of linkage arms 138a, 138b driven by actuators housed within the wrist component 134. Each pair of linkage arms 138a, 138b are connected at their distal ends by a mount 140, which carries a finger sub-assembly 142.

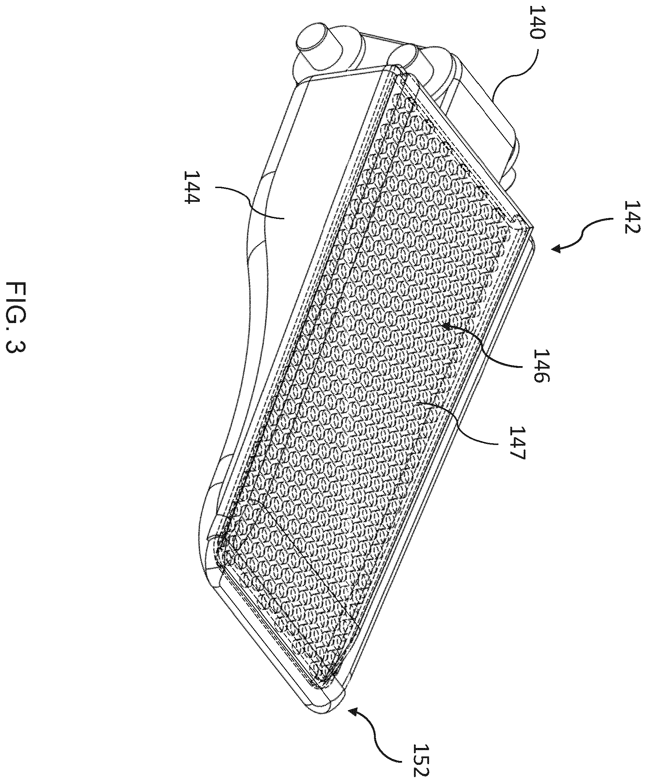

Turning to Figure 3, the finger sub-assembly 142 comprises a base unit 144 connectable to the gripper assembly 122 by the mount 140, and a high-friction pad 146 defining a contact surface 147 for an article during its manipulation. In conventional finger sub-assemblies, a high-friction pad would be secured to its base unit, or the equivalent, by an adhesive. This can cause issues as the adhesive may degrade over time, leading to the detachment of the high-friction pad, and can be particularly problematic if the gripper assembly 122 is required to pick grocery items as it would require a food-safe adhesive that must satisfy strict regulatory requirements. The use of an adhesive also makes replacing the high-friction pad more difficult. Instead of an adhesive, therefore, the finger sub-assembly 142 of the present invention is configured such that the high-friction pad 146 is mechanically secured to or engaged with the base unit 144, as opposed to a chemical bond that would be provided by an adhesive, preventing relative movement therebetween. In one example, the finger sub-assembly 142 may include a frame unit that can be fastened to the base unit 144 to clamp the high-friction pad 146 in position. In the example shown in Figure 3, the base unit 144 comprises a cutout 148 that defines a recessed area 150 into which the high-friction pad 146 is received. In this example, the cutout 148 and high-friction pad 146 are configured to enable the high-friction pad 146 to be slidably received in the recessed area 150. This arrangement avoids the use of adhesive and provides a straightforward way to remove and replace the high-friction pad 146 as necessary.

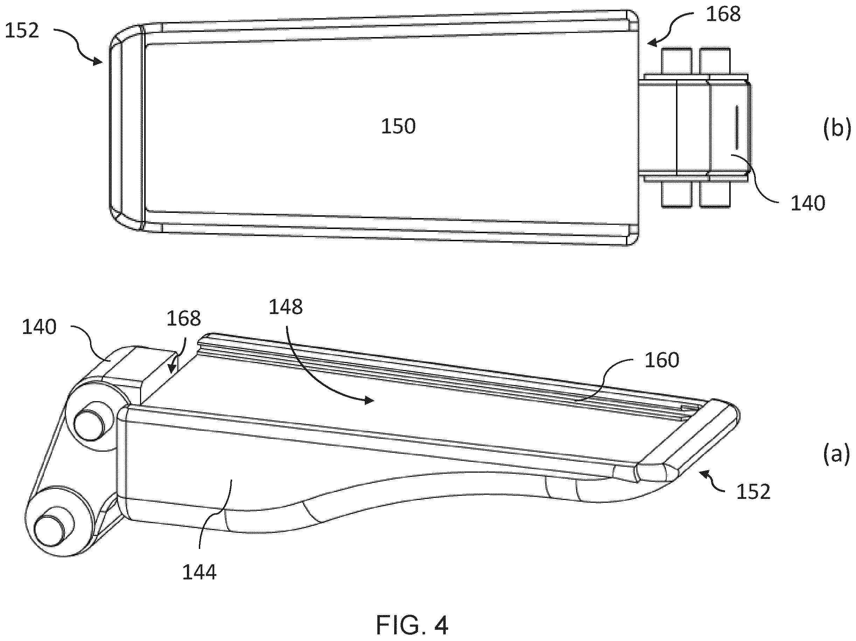

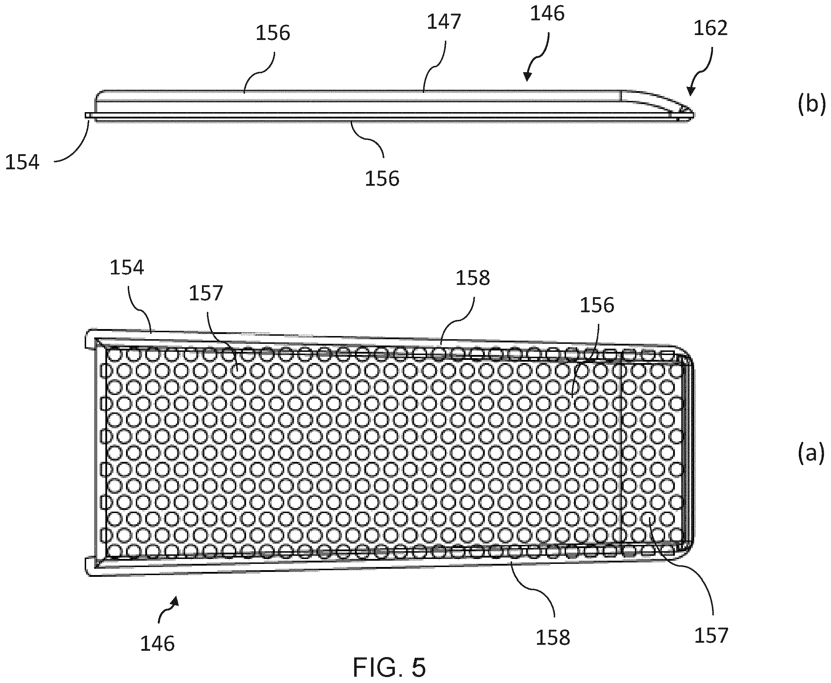

With reference to Figures 4a, 4b, 5a and 5b, in order to facilitate the insertion and removal of the high-friction pad 146, the width of the cutout 148 is tapered, along the major or longitudinal axis of the base unit 144, in a direction towards a tip 152 of the base unit 144, and the high-friction pad 146 is similarly tapered, defining a complementary shape.

In this example, the high-friction pad 146 comprises a substantially rigid plate 154 overmolded by a high-friction compressible material 156, such as silicon. The rigid plate 154 may be made from metal, such as aluminium, and comprises a plurality of perforations 157 to facilitate the overmold process by allowing the liquefied high-friction material 156 to flow both sides of the rigid plate 154. The area over which the high-friction material 156 is moulded is less than that of the rigid plate 154, leaving exposed rims 158 that extend along each longitudinal side of the high-friction pad 146. These rims 158 are configured to be received within longitudinal undercuts 160 formed within the sides of the cutout 148 when the high-friction pad 146 is received in the recessed area 150 to correctly locate the high-friction pad 146 within the cutout 148, and further ease the insertion and removal of the high-friction pad 146.

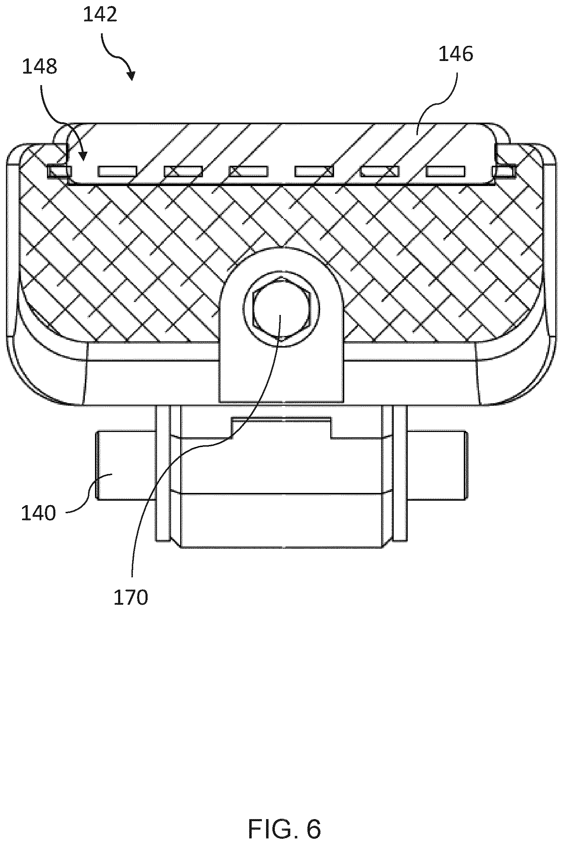

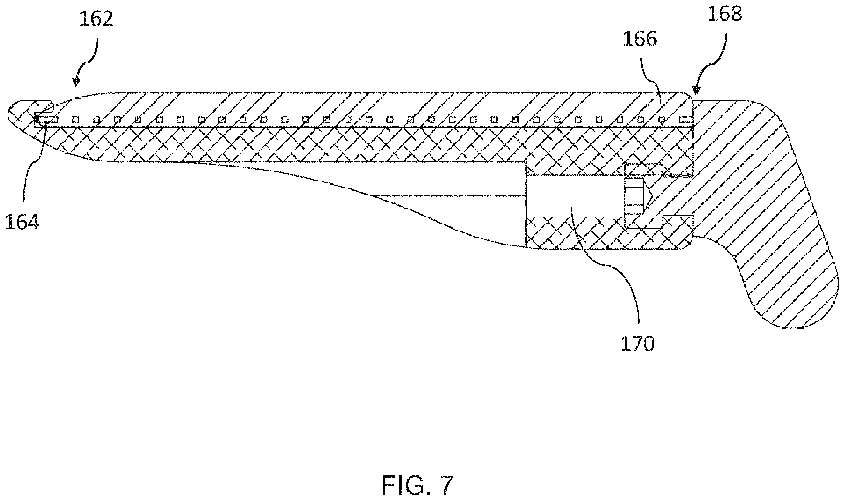

In general, the cutout 148 and the high-friction pad 146 are configured to form interference or press fitted joints when the high-friction pad 146 is placed within the cutout 148, providing a frictional connection that holds the high-friction pad 146 in position relative to the cutout 148. To that end, with respect to the current example of the finger sub-assembly 142, the high-friction pad 146 is oversized when compared to the cutout 148 both in the lateral and longitudinal directions, as shown in Figures 6 and 7 respectively, meaning that the high-friction pad 146 is under compression when held within the cutout 148. With reference to Figure 7, the thickness of the high-friction pad 146 towards its end 162 positioned by the tip 152 of the base unit 144 is tapered or decreases, defining a curved contact surface 147 in that region of the high-friction pad 146. This tapered end 162, which includes a section of the rigid plate 154, is received in a lateral undercut 164 formed in the end of the cutout 148. This compresses the high-friction material 156 in the lateral undercut 164, forming an interference or press fitted joint near to the tip 152 of the base unit 144. The tip 152 is bulbous or rounded so as to protect this joint from impacts during use. The other end 166 of the high-friction pad 146 sits within an open end 168 of the cutout 148. The open end 168 is at least partially closed by the mount 140 when it is fastened to the finger sub-assembly 142, as shown in Figure 4a. The base unit 144 comprises a bore 170 through which a bolt configured to fasten the finger sub-assembly 142 to the mount 140 can be easily accessed.

The mount 140, in this respect, serves to retain the high-friction pad 146 in position through the application of a compressive force. These arrangements, of having a tight fitting connections between high-friction pad 146 and the cutout 148, ensures that the joints formed therebetween are slight, having minimal depth and width. This lessens the areas on the finger sub-assembly 122 in which dirt and bacteria can accumulate, which is an important consideration particularly if the gripper assembly 122 is required to pick grocery items.

The foregoing description has been presented for the purpose of illustration only and is not intended to be exhaustive or to limit the invention to the precise embodiments disclosed. It will be appreciated that modifications and variations can be made to the described embodiments without departing from the scope of the invention as defined in the appended claims.

## Claims

1. A finger sub-assembly (142) for a gripper assembly (122), the finger sub-assembly (142) comprising:
a base unit (144) connectable to the gripper assembly (122) by a mount (140), the base unit (144) comprising a cutout (148) defining a recessed area (150); and,
a high-friction pad (146) received within the recessed area (150) for contacting an article during its manipulation,
being **characterised in that** the cutout (148) and the high-friction pad (146) are configured to form an interference fit.

2. A finger sub-assembly (142) according to claim 1, wherein the high-friction pad (146) is oversized with respect to the cutout (148) in a lateral direction.

3. A finger sub-assembly (142) according to claim 1 or 2, wherein the high-friction pad (146) is oversized with respect to the cutout (148) in a longitudinal direction.

4. A finger sub-assembly (142) according to any preceding claim, wherein the widths of the cutout (148) and the high-friction pad (146) are tapered in a direction towards the tip (152) of the base unit (144).

5. A finger sub-assembly (142) according to any preceding claim, wherein the high-friction pad (146) comprises a rigid plate (154) overmolded by a high-friction material (156) and wherein the base unit (144) further comprises longitudinal undercuts (160) into which parts of the rigid plate (154) are received when the high-friction pad (146) is received in the cutout (148).

6. A finger sub-assembly (142) according to claim 5, wherein the end of the cutout (148) at the tip (152) of the base unit (144) comprises a lateral undercut (164) into which part of the rigid plate (154) is received when the high-friction pad (146) is received in the cutout (148).

7. A finger sub-assembly (142) according to claim 6, wherein the thickness of the high-friction pad (146) is tapered such that the high-friction material (156) and part of the rigid plate (154) are received in the lateral undercut (164) when the high-friction pad (146) is received in the cutout (148).

8. A finger sub-assembly (142) according to any one of claims 5 to 7, wherein the rigid plate (154) is perforated.

9. A finger sub-assembly (142) according to any preceding claim, wherein the cutout (148) comprises an open end (168) through which the high-friction pad (146) is received.

10. A finger sub-assembly (142) according to claim 9, wherein the base unit (144) is configured such that the open end (168) of the cutout (148) is at least partially closed by the mount (140) when the finger sub-assembly (142) is connected thereto.

11. A finger sub-assembly (142) according to any preceding claim, wherein the tip (152) of the base unit (144) is shaped to protect the end of the high-friction pad (146) from impacts during use.

12. A finger sub-assembly (142) according to any preceding claim, wherein the base unit (144) comprises a bore (170) through which a bolt configured to fasten the finger sub-assembly (142) to the mount (140) can be accessed.

13. A finger sub-assembly (142) according to claim 1, further comprising a frame unit, wherein the frame and base units (144) are configured to be fastened together to clamp the high-friction pad (146) in position.

14. A gripper assembly (122) comprising a finger sub-assembly (142) according to any preceding claim.

15. A robotic manipulator (121) comprising a gripper assembly (122) according to claim 14.

## Patentansprüche

1. Fingerunterbaugruppe (142) für eine Greiferbaugruppe (122), wobei die Fingerunterbaugruppe (142) Folgendes umfasst:
eine Basiseinheit (144), die durch eine Halterung (140) mit der Greiferbaugruppe (122) verbunden werden kann, wobei die Basiseinheit (144) einen Ausschnitt (148) umfasst, der einen vertieften Bereich (150) definiert;
und
ein Pad (146) mit hoher Reibung, das in dem vertieften Bereich (150) aufgenommen ist, um mit einem Gegenstand während seiner Handhabung in Kontakt zu treten,
**dadurch gekennzeichnet, dass** der Ausschnitt (148) und das Pad (146) mit hoher Reibung konfiguriert sind, um eine Presspassung zu bilden.

2. Fingerunterbaugruppe (142) nach Anspruch 1, wobei das Pad (146) mit hoher Reibung in Bezug auf den Ausschnitt (148) in einer seitlichen Richtung überdimensioniert ist.

3. Fingerunterbaugruppe (142) nach einem der Ansprüche 1 oder 2, wobei das Pad (146) mit hoher Reibung in Bezug auf den Ausschnitt (148) in einer Längsrichtung überdimensioniert ist.

4. Fingerunterbaugruppe (142) nach einem der vorhergehenden Ansprüche, wobei die Breiten des Ausschnitts (148) und des Pads (146) mit hoher Reibung in einer Richtung zur Spitze (152) der Basiseinheit (144) hin verjüngt sind.

5. Fingerunterbaugruppe (142) nach einem der vorhergehenden Ansprüche, wobei das Pad (146) mit hoher Reibung eine starre Platte (154) umfasst, die von einem Material (156) mit hoher Reibung umformt ist, und wobei die Basiseinheit (144) ferner längliche Hinterschneidungen (160) umfasst, in die Teile der starren Platte (154) aufgenommen sind, wenn das Pad (146) mit hoher Reibung im Ausschnitt (148) aufgenommen ist.

6. Fingerunterbaugruppe (142) nach Anspruch 5, wobei das Ende des Ausschnitts (148) an der Spitze (152) der Basiseinheit (144) eine seitliche Hinterschneidung (164) umfasst, in die ein Teil der starren Platte (154) aufgenommen ist, wenn das Pad (146) mit hoher Reibung im Ausschnitt (148) aufgenommen ist.

7. Fingerunterbaugruppe (142) nach Anspruch 6, wobei die Dicke des Pads (146) mit hoher Reibung derart verjüngt ist, dass das Material (156) mit hoher Reibung und ein Teil der starren Platte (154) in der seitlichen Hinterschneidung (164) aufgenommen sind, wenn das Pad (146) mit hoher Reibung im Ausschnitt (148) aufgenommen ist.

8. Fingerunterbaugruppe (142) nach einem der Ansprüche 5 bis 7, wobei die starre Platte (154) durchlöchert ist.

9. Fingerunterbaugruppe (142) nach einem der vorhergehenden Ansprüche, wobei der Ausschnitt (148) ein offenes Ende (168) umfasst, durch das das Pad (146) mit hoher Reibung aufgenommen ist.

10. Fingerunterbaugruppe (142) nach Anspruch 9, wobei die Basiseinheit (144) so konfiguriert ist, dass das offene Ende (168) des Ausschnitts (148) zumindest teilweise durch die Halterung (140) verschlossen ist, wenn die Fingerunterbaugruppe (142) damit verbunden ist.

11. Fingerunterbaugruppe (142) nach einem der vorhergehenden Ansprüche, wobei die Spitze (152) der Basiseinheit (144) so geformt ist, dass sie das Ende des Pads (146) mit hoher Reibung während der Verwendung vor Stößen schützt.

12. Fingerunterbaugruppe (142) nach einem der vorhergehenden Ansprüche, wobei die Basiseinheit (144) eine Bohrung (170) umfasst, durch die auf einen Bolzen zugegriffen werden kann, der konfiguriert ist, um die Fingerunterbaugruppe (142) an der Halterung (140) zu befestigen.

13. Fingerunterbaugruppe (142) nach Anspruch 1, ferner umfassend eine Rahmeneinheit, wobei die Rahmen- und Basiseinheiten (144) konfiguriert sind, um aneinander befestigt zu werden, um das Pad (146) mit hoher Reibung in Position zu klemmen.

14. Greiferbaugruppe (122), umfassend eine Fingerunterbaugruppe (142) nach einem der vorhergehenden Ansprüche.

15. Robotermanipulator (121), umfassend eine Greiferbaugruppe (122) nach Anspruch 14.

## Revendications

1. Sous-ensemble doigt (142) pour un ensemble de préhension (122), le sous-ensemble doigt (142) comprenant :
une unité de base (144) pouvant être reliée à l'ensemble de préhension (122) par un support (140), l'unité de base (144) comprenant une découpe (148) définissant une zone évidée (150) ; et,
un patin à frottement élevé (146) reçu dans la zone évidée (150) pour entrer en contact avec un article lors de sa manipulation,
**caractérisé en ce que** la découpe (148) et le patin à frottement élevé (146) sont configurés pour former un ajustement serré.

2. Sous-ensemble doigt (142) selon la revendication 1, dans lequel le patin à frottement élevé (146) est surdimensionné par rapport à la découpe (148) dans une direction latérale.

3. Sous-ensemble doigt (142) selon la revendication 1 ou 2, dans lequel le patin à frottement élevé (146) est surdimensionné par rapport à la découpe (148) dans une direction longitudinale.

4. Sous-ensemble doigt (142) selon l'une quelconque des revendications précédentes, dans lequel les largeurs de la découpe (148) et du patin à frottement élevé (146) sont effilées en direction de l'extrémité (152) de l'unité de base (144).

5. Sous-ensemble doigt (142) selon l'une quelconque des revendications précédentes, dans lequel le patin à frottement élevé (146) comprend une plaque rigide (154) surmoulée d'un matériau à frottement élevé (156) et dans lequel l'unité de base (144) comprend en outre des gorges longitudinales (160) dans lesquelles des parties de la plaque rigide (154) sont reçues lorsque le patin à frottement élevé (146) est reçu dans la découpe (148).

6. Sous-ensemble doigt (142) selon la revendication 5, dans lequel l'extrémité de la découpe (148) à la pointe (152) de l'unité de base (144) comprend une gorge latérale (164) dans laquelle une partie de la plaque rigide (154) est reçue lorsque le patin à frottement élevé (146) est reçu dans la découpe (148).

7. Sous-ensemble doigt (142) selon la revendication 6, dans lequel l'épaisseur du patin à frottement élevé (146) est effilée de sorte que le matériau à frottement élevé (156) et une partie de la plaque rigide (154) sont reçus dans la gorge latérale (164) lorsque le patin à frottement élevé (146) est reçu dans la découpe (148).

8. Sous-ensemble doigt (142) selon l'une quelconque des revendications 5 à 7, dans lequel la plaque rigide (154) est perforée.

9. Sous-ensemble doigt (142) selon l'une quelconque des revendications précédentes, dans lequel la découpe (148) comprend une extrémité ouverte (168) à travers laquelle le patin à frottement élevé (146) est reçu.

10. Sous-ensemble doigt (142) selon la revendication 9, dans lequel l'unité de base (144) est configurée de sorte que l'extrémité ouverte (168) de la découpe (148) est au moins partiellement fermée par le support (140) lorsque le sous-ensemble doigt (142) est relié à celle-ci.

11. Sous-ensemble doigt (142) selon l'une quelconque des revendications précédentes, dans lequel la pointe (152) de l'unité de base (144) est formée pour protéger l'extrémité du patin à frottement élevé (146) contre les chocs pendant l'utilisation.

12. Sous-ensemble doigt (142) selon l'une quelconque des revendications précédentes, dans lequel l'unité de base (144) comprend un alésage (170) à travers lequel un boulon configuré pour fixer le sous-ensemble doigt (142) au support (140) peut être accessible.

13. Sous-ensemble doigt (142) selon la revendication 1, comprenant en outre une unité de cadre, dans lequel l'unité de cadre et l'unité de base (144) sont configurées pour être fixées l'une à l'autre afin de serrer le patin à frottement élevé (146) en position.

14. Ensemble de préhension (122) comprenant un sous-ensemble doigt (142) selon l'une quelconque des revendications précédentes.

15. Manipulateur robotique (121) comprenant un ensemble de préhension (122) selon la revendication 14.
